# EUROPEAN PATENT APPLICATION

(11) **EP 4 694 543 A1**
(43) Date of publication of application: **11.02.2026**
(21) Application number: 24784306.3
(22) Date of filing: 02.04.2024
(51) Int. Cl.: H04W 76/10

(54) **PATH ESTABLISHMENT METHODS AND APPARATUSES, UE, NETWORK SIDE DEVICE, AND READABLE STORAGE MEDIUM**

(30) Priority: 06.04.2023 CN 202310370127
(71) Applicant: Vivo Mobile Communication Co., Ltd., Dongguan, Guangdong 523863 (CN)
(72) Inventor: LIU, Jiamin, Dongguan, Guangdong 523863 (CN)
(74) Representative: Walaski, Jan Filip
(86) International application number: PCT/CN2024/085641
(87) International publication number: WO 2024/208223

(57) **Abstract**

This application discloses a path establishment method and apparatus, UE, a network-side device, and a readable storage medium, pertaining to the field of communication technologies. The path establishment method of embodiments of this application includes: determining, by first UE, based on a transmission path configuration of a signaling radio bearer SRB1 carrying Uu signaling, whether to send a PC5 radio resource control RRC message to relay UE, where the PC5 RRC message is used to trigger the relay UE to enter a connected state; where a transmission path corresponding to the transmission path configuration of the SRB1 carrying Uu signaling includes at least one of the following: an indirect path between the first UE and a network-side device, and a direct path between the first UE and the network-side device; where the indirect path includes a PC5 link between the first UE and the relay UE and a Uu link between the relay UE and the network-side device.

## Description

### CROSS-REFERENCE TO RELATED APPLICATIONS

This application claims priority to Chinese Patent Application No. 202310370127.1, filed in China on April 6, 2023, which is incorporated herein by reference in its entirety.

### TECHNICAL FIELD

This application pertains to the field of communication technologies, and specifically relates to a path establishment method and apparatus, UE, a network-side device, and a readable storage medium.

### BACKGROUND

The relay technology allows forwarding data between a network-side device and user equipment (User Equipment, UE) by deploying a relay node in the network, achieving enhanced network capacity, addressing backhaul connections between network-side devices, and resolving blind spots of coverage. Currently, in a relay system, relay UE is responsible for providing relay services for data transmission or signaling transmission between remote UE and a network-side device.

In the existing R17 technical solution, when switching from a direct link (direct link) to an indirect link (that is, indirect link), the remote UE sends a radio resource control (Radio Resource Control, RRC) message on the indirect link to trigger the relay UE to enter a connected state to provide relay services for the remote UE. However, during the multipath establishment process in R18, the remote UE can add an indirect link while retaining an existing direct link. As a result, an SRB1 carrying the RRC message may be transmitted directly on the direct link without passing through the relay UE, which leads to a failure in triggering the relay UE to enter a connected state to provide relay services for the remote UE.

Therefore, how to ensure that the relay UE can be triggered to enter the connected state in a timely manner during multipath establishment in R18 is a problem to be resolved.

### SUMMARY

Embodiments of this application provide a path establishment method and apparatus, UE, a network-side device, and a readable storage medium, which can resolve the problem that relay UE cannot be triggered to enter a connected state to provide relay services for remote UE during multipath establishment.

According to a first aspect, a path establishment method is provided, which is executed by first UE, and the method includes: determining, by the first UE, based on a transmission path configuration of a signaling radio bearer SRB1 carrying Uu signaling, whether to send a PC5 radio resource control RRC message to relay UE, where the PC5 RRC message is used to trigger the relay UE to enter a connected state; where a transmission path corresponding to the transmission path configuration of the SRB1 carrying Uu signaling includes at least one of the following: an indirect path between the first UE and a network-side device, and a direct path between the first UE and the network-side device; where the indirect path includes a PC5 link between the first UE and the relay UE and a Uu link between the relay UE and the network-side device.

According to a second aspect, a path establishment method is provided, which is executed by relay UE, and the method includes: receiving, by the relay UE, a PC5 radio resource control RRC message sent by first UE, where the PC5 RRC message is used to trigger the relay UE to enter a connected state.

According to a third aspect, a path establishment method is provided, which is executed by a network-side device, and the method includes: sending, by a network-side device, a first reconfiguration message to first UE; where the first reconfiguration message includes configuration information related to addition of an indirect path; and the first reconfiguration message is used to establish a PC5 connection between the first UE and the relay UE.

According to a fourth aspect, a path establishment apparatus is provided, where the apparatus includes a determining module, and the determining module is configured to determine, based on a transmission path configuration of a signaling radio bearer SRB1 carrying Uu signaling, whether to send a PC5 radio resource control RRC message to relay UE, where the PC5 RRC message is used to trigger the relay UE to enter a connected state; where a transmission path corresponding to the transmission path configuration of the SRB1 carrying Uu signaling includes at least one of the following: an indirect path between the first UE and a network-side device, and a direct path between the first UE and the network-side device; where the indirect path includes a PC5 link between the first UE and the relay UE and a Uu link between the relay UE and the network-side device.

According to a fifth aspect, a path establishment apparatus is provided, where the apparatus includes a receiving module, and the receiving module is configured to receive a PC5 radio resource control RRC message sent by first UE, where the PC5 RRC message is used to trigger relay UE to enter a connected state.

According to a sixth aspect, a path establishment apparatus is provided, where the apparatus includes a sending module, and the sending module is configured to send a first reconfiguration message to first UE; where the first reconfiguration message includes configuration information related to addition of an indirect path; and the first reconfiguration message is used to establish a PC5 connection between the first UE and relay UE.

According to a seventh aspect, UE is provided, where the UE includes a processor and a memory, where a program or instructions capable of running on the processor are stored in the memory. When the program or the instructions are executed by the processor, the steps of the method according to the first aspect are implemented.

According to an eighth aspect, UE is provided, including a processor and a communication interface, where the processor is configured to determine, based on a transmission path configuration of a signaling radio bearer SRB1 carrying Uu signaling, whether to send a PC5 radio resource control RRC message to relay UE, where a transmission path corresponding to the transmission path configuration of the SRB1 carrying Uu signaling includes at least one of the following: an indirect path between the first UE and a network-side device, and a direct path between the first UE and the network-side device; where the indirect path includes a PC5 link between the first UE and the relay UE and a Uu link between the relay UE and the network-side device.

According to a ninth aspect, relay UE is provided, where the relay UE includes a processor and a memory, where a program or instructions capable of running on the processor are stored in the memory. When the program or the instructions are executed by the processor, the steps of the method according to the second aspect are implemented.

According to a tenth aspect, relay UE is provided, which includes a processor and a communication interface, where the communication interface is configured to receive a PC5 radio resource control RRC message sent by first UE, where the PC5 RRC message is used to trigger the relay UE to enter a connected state.

According to an eleventh aspect, a network-side device is provided, where the network-side device includes a processor and a memory, where a program or instructions capable of running on the processor are stored in the memory. When the program or the instructions are executed by the processor, the steps of the method according to the third aspect are implemented.

According to a twelfth aspect, a network-side device is provided, including a processor and a communication interface, where the communication interface is configured to send a first reconfiguration message to first UE; where the first reconfiguration message includes configuration information related to addition of an indirect path; and the first reconfiguration message is used to establish a PC5 connection between the first UE and the relay UE.

According to a thirteenth aspect, a readable storage medium is provided, where the readable storage medium stores a program or instructions, and when the program or instructions are executed by the processor, the steps of the method according to the first aspect are implemented, or the steps of the method according to the second aspect are implemented, or the steps of the method according to the third aspect are implemented.

According to a fourteenth aspect, a wireless communication system is provided, which includes first UE, relay UE, and a network-side device, where the first UE can be configured to perform the steps of the method according to the first aspect, the second UE can be configured to perform the steps of the method according to the second aspect, and the network-side device can be configured to perform the steps of the method according to the third aspect.

According to a fifteenth aspect, a chip is provided, where the chip includes a processor and a communication interface, the communication interface is coupled to the processor, and the processor is configured to run a program or instructions to implement the method according to the first aspect, or the method according to the second aspect, or the method according to the third aspect.

According to a sixteenth aspect, a computer program/program product is provided, where the computer program/program product is stored in a storage medium, and the program/program product is executed by at least one processor to implement the steps of the path establishment method according to the first aspect, or the path establishment method according to the second aspect, or the path establishment method according to the third aspect.

In the embodiments of this application, the first UE determines, based on the transmission path configuration of the radio bearer SRB1 carrying Uu signaling, whether to send a PC5 radio resource control RRC message to the relay UE, where the PC5 RRC message is used to trigger the relay UE to enter the connected state. The transmission path corresponding to the transmission path configuration of the SRB1 carrying Uu signaling includes at least one of the following: an indirect path between the first UE and the network-side device, and a direct path between the first UE and the network-side device; where the indirect path includes a PC5 link between the first UE and the relay UE and a Uu link between the relay UE and the network-side device. In this method, based on the transmission path configuration of the SRB1 between the first UE and the network-side device, the first UE can determine whether to send a PC5 RRC message dedicated to triggering the relay UE to enter the connected state, so that the relay UE can be triggered to enter the connected state regardless of whether the transmission path of the SRB1 between the first UE and the network-side device is a direct path or an indirect path, thereby ensuring successful multipath establishment for the first UE.

### BRIEF DESCRIPTION OF DRAWINGS

FIG. 1 is a block diagram of an architecture of a wireless communication system according to an embodiment of this application;
FIG. 2 is a first flowchart of a path establishment method according to an embodiment of this application;
FIG. 3 is a second flowchart of a path establishment method according to an embodiment of this application;
FIG. 4 is a third flowchart of a path establishment method according to an embodiment of this application;
FIG. 5 is a first schematic diagram of a path establishment apparatus according to an embodiment of this application;
FIG. 6 is a second schematic diagram of a path establishment apparatus according to an embodiment of this application;
FIG. 7 is a third schematic diagram of a path establishment apparatus according to an embodiment of this application;
FIG. 8 is a schematic diagram of a communication device according to an embodiment of this application;
FIG. 9 is a schematic diagram of a hardware structure of a terminal according to an embodiment of this application; and
FIG. 10 is a schematic diagram of a hardware structure of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the "or" in this application means at least one of the associated objects. For example, "A or B" covers three schemes, namely, scheme 1: including A not B; scheme 2: including B not A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as: a sender explicitly notifies, in a sent indication, a receiver of content such as specific information, an operation that needs to be performed, or a request result; and the indirect indication may be understood as: the receiver determines corresponding information or performs determining according to the indication sent by the sender, and determines, according to a determining result, an operation that needs to be performed or a request result.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6^{th} Generation, 6G) communication system.

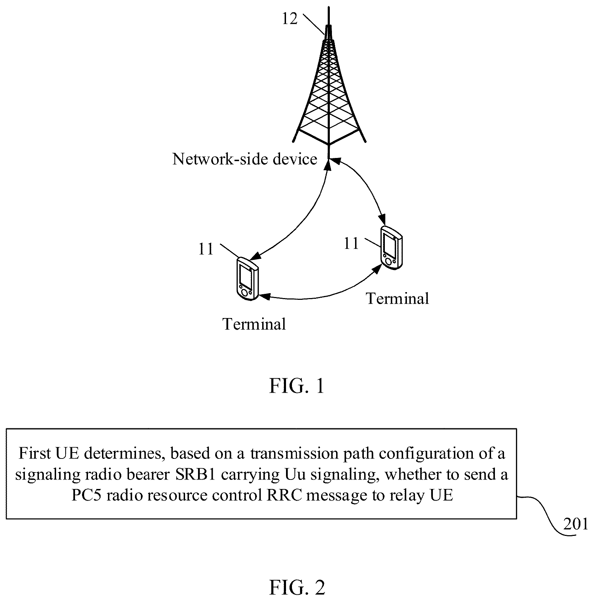

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a personal digital assistant (personal digital assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), flight vehicle (flight vehicle), vehicle user equipment (Vehicle User Equipment, VUE), ship equipment, pedestrian user equipment (Pedestrian User Equipment, PUE), a smart home device (a home device with wireless communication function, such as a refrigerator, a television, a washing machine, or a furniture), a game console, a personal computer (Personal Computer, PC), a teller machine, a self-service machine, or the like. The wearable device includes: a smart watch, a wrist band, smart earphones, smart glasses, smart jewelry (smart bracelet, smart wristband, smart ring, smart necklace, smart anklet, smart ankle bracelet, or the like), smart wristband, smart clothing, and the like. The vehicle user equipment may alternatively be referred to as a vehicle-mounted terminal, a vehicle-mounted controller, a vehicle-mounted module, a vehicle-mounted component, a vehicle-mounted chip, or vehicle-mounted unit. It should be noted that the terminal 11 is not limited to any specific type in the embodiments of this application. The network-side device 12 may include an access network device or a core network device, where the access network device may also be referred to as a radio access network (Radio Access Network, RAN), a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is introduced as an example, and the specific type of the core network device is not limited.

The following describes in detail the background and terms involved in this application:

### I. Sidelink relay

In the relay (Relay) technology for the wireless communication system, one or more relay nodes are added between a base station and a terminal, and are responsible for forwarding a wireless signal for one or more times. In other words, the wireless signal passes through multiple hops before reaching the terminal.

Wireless relay technology can be used not only to expand cell coverage and address blind spots of cell coverage, but also to improve cell capacity through spatial resource reuse. For indoor coverage, the relay technology can help overcome penetration loss and enhance indoor coverage quality.

For example, in simple two-hop relay, for radio relay, a base station - terminal link is divided into two links: base station - relay station, and relay station - terminal, making it possible to replace a link with poor quality with two links with good quality, so as to obtain a higher link capacity and better coverage.

Currently, LTE already supports UE-to-Network relay, where one end of the relay connects to the UE and the other end connects to the network side. UE connected to the relay is referred to as remote UE (that is, Remote UE).

NR will also study how to support the UE-to-Network Relay mechanism. In the UE-to-Network scenario, the remote UE needs to transmit data with the network side, but due to poor coverage, finds relay UE to act as an intermediary. The relay UE communicates with the base station via a Uu interface, and the relay UE communicates with the remote UE via a sidelink (Sidelink, SL) PC5 interface. Generally, the relay UE is open and can provide services for any remote UE.

### II. Multiple path (multipath) scenario definition

According to the SL relay architecture, multipath means that the remote UE has established both an indirect path and direct path.

### III. Indirect path

The indirect path, translated as an indirect path, refers to a wireless link where the remote UE (or Primary UE) establishes an RRC connection with the base station through the relay UE (or Secondary UE) and the Uu interface of the relay UE (or Secondary UE).

### IV. Direct path

The direct path, translates as direct path, refers to a wireless link where the remote UE (or Primary UE) establishes an RRC connection with the base station through its own Uu interface.

At present, in the existing R17 technical solution, when switching from a direct link (that is, direct link) to an indirect link (that is, indirect link), the remote UE triggers (trigger) the relay UE in an idle or inactive state to enter a connected state to provide relay services for itself.

In R17, the remote UE sends an RRC (radio resource control, Radio Resource Control) reconfiguration complete (that is, RRC Reconfiguration Complete) message on a default PC5 RLC (radio link control, Radio Link Control) channel (that is, default PC5 RLC channel). Because this message is sent through a special default bearer and is finally sent to the base station side through the relay UE, the relay UE can learn intention of the remote UE through this message, so as to actively enter the connected state and report its relay identity to the network-side device, thus completing Uu side configuration for the bearer and mapping of the remote UE, and then providing signaling and data forwarding services for the remote UE.

However, in R18, during establishment of the sidelink relay multipath (that is, SL relay multipath), the key difference from R17 is that, in addition to establishing a new really indirect link (that is, really indirect link), an existing Uu direct link (that is, Uu direct link) is retained. As a result, for an SRB (signaling radio bearer, Signaling Radio Bearer) 1 message, including an RRC reconfiguration complete message, a transmission path is not limited to a relay link. In fact, the SRB1, especially the RRC reconfiguration complete message, is highly likely to be transmitted directly on the direct link. In such cases, the R17 method of triggering the relay UE to initiate RRC connection establishment to enter the connected state cannot be reliably used. Therefore, a new method is needed to ensure that the relay UE can promptly complete the state transition, which is a problem to be addressed.

In the path establishment method provided in the embodiments of this application, the first UE determines whether to send a PC5 radio resource control RRC message to the relay UE based on a transmission path configuration of a radio bearer SRB1 carrying Uu signaling, where the PC5 RRC message is used to trigger the relay UE to enter a connected state. A transmission path corresponding to the transmission path configuration of the SRB1 carrying Uu signaling includes at least one of the following: an indirect path between the first UE and the network-side device, and a direct path between the first UE and the network-side device; where the indirect path includes a PC5 link between the first UE and the relay UE and a Uu link between the relay UE and the network-side device. In this method, based on the transmission path configuration of the SRB1 between the first UE and the network-side device, the first UE can determine whether to send a PC5 RRC message dedicated to triggering the relay UE to enter the connected state. For example, if the transmission path of the SRB1 is configured as an indirect link, the R17 method of triggering the relay UE to enter the connected state is reused, that is, by sending an RRC reconfiguration complete message on the indirect link to trigger the relay UE to enter the connected state from an idle or inactive state. Alternatively, if the transmission path of the SRB1 is configured as a direct path, a new PC5 RRC procedure can be used to trigger the relay UE to enter the connected state, that is, by sending a PC5 RRC message specifically used to trigger the relay UE to enter the connected state on the indirect link. Thus, regardless of whether the transmission path of the SRB1 between the first UE and the network-side device is a direct path or an indirect path, the relay UE can be triggered to enter the connected state, ensuring successful multipath establishment for the first UE.

The following specifically describes the path establishment method provided in the embodiments of this application through specific embodiments and application scenarios thereof with reference to the accompanying drawings.

FIG. 2 is a flowchart of a path establishment method according to an embodiment of this application. As shown in FIG. 2, the path establishment method may include the following step S201.

Step S201: First UE determines, based on a transmission path configuration of a signaling radio bearer SRB1 carrying Uu signaling, whether to send a PC5 radio resource control RRC message to relay UE.

The PC5 RRC message is used to trigger the relay UE to enter a connected state.

In this embodiment of this application, a transmission path corresponding to the transmission path configuration of the SRB1 carrying Uu signaling includes at least one of the following:
an indirect path between the first UE and a network-side device; and
a direct path between the first UE and the network-side device.

The indirect path includes a PC5 link between the first UE and the relay UE and a Uu link between the relay UE and the network-side device.

In this embodiment, the first UE may be remote UE, that is, remote UE.

In this embodiment of this application, the network-side device may be a base station.

In this embodiment of this application, the Uu signaling is Uu interface signaling, and the Uu interface signaling may include RRC signaling carried by the SRB1.

Optionally, in this embodiment of this application, a message carried by the SRB1 includes an RRC reconfiguration complete message, the RRC reconfiguration complete message is a response message to an RRC reconfiguration message, and the RRC reconfiguration message includes configuration information related to addition of an indirect path.

In this embodiment of this application, in a case that the R17 triggering method cannot trigger the relay UE to enter the connected state, a new PC5 RRC triggering method can be used, where the remote UE notifies the relay UE through PC5 RRC to perform state transition.

In this embodiment of this application, the PC5 RRC message may be an RRC message sent through the PC5 interface between the first UE and the relay UE.

Optionally, in this embodiment of this application, the PC5 RRC message satisfies any one of the following:
the PC5 RRC message is a legacy PC5 RRC message; and
the PC5 RRC message is a newly added PC5 RRC message.

It should be noted that a difference between the new PC5 RRC procedure for triggering the relay UE to enter the connected state provided in the embodiments of this application and the procedure for triggering the relay UE to enter the connected state in the related art lies in that:, in the embodiments of this application, the PC5 RRC message sent by the first UE to the relay UE is specifically used to trigger the relay UE to enter the connected state, whereas in the related art, the RRC reconfiguration complete message sent by the first UE to the relay UE is a response message that the first UE needs to send to the base station after the base station sends an RRC reconfiguration message in specific scenarios, and this response message is merely forwarded to the base station via the relay UE. Therefore, the PC5 RRC message in this application is essentially different from the RRC reconfiguration complete message in the related art.

Optionally, in this embodiment of this application, the PC5 RRC message is a legacy PC5 RRC message, and the RRC message carries an indication field, where the indication field is used to indicate that the relay UE enters a connected state to provide forwarding services.

For example, a legacy PC5 RRC message, such as RemoteUEInformationSidelink or UEAssistanceInformationSidelink, can be used, and a new indication field, such as trigger-to-Con, can be included in the message to indicate that the remote UE needs to trigger the relay UE to enter the connected state to provide forwarding services. Alternatively, a new PC5 RRC message, such as RemoteUETriggerSidelink, can be designed, where sending of this message indicates that the remote UE needs to trigger the relay UE to enter the connected state to provide forwarding services.

It should be noted that the indirect link can also be referred to as indirect path, with English terms such as "relay link" or "indirect path", the idle/inactive state is represented in English as "IDLE/INACTIVE".

It can be understood that the core problem to be solved by this application is: how to trigger the relay UE in an idle/inactive state on an indirect link in a multipath configuration to enter the connected state in a timely manner, so as to receive a configuration related to the relay link for the remote UE and complete a transmission service of the relay link.

According to the D2I (Direct to Indirect) handover procedure of R17 SL relay, the network-side device sends an RRC reconfiguration message for path switching to the remote UE, and switches the remote UE to the relay link, so that the remote UE operates according to the new configuration and transmits an RRC reconfiguration complete message on the relay link. The RRC reconfiguration complete message is first transmitted to the relay UE by the remote UE through a default PC5 RLC channel (that is, the channel). The relay UE learns, based on a special pipeline identifier (SL-RLC1, with the logical channel identifier being 57 as specified by the standard), that this is an SRB1 message from the remote UE destined for the base station. Upon receiving this message, the relay UE immediately initiates RRC connection establishment, enters the connected state, and reports its relay UE identity and L2 ID to the network-side device. The network-side device stores an association relationship between the remote UE and the relay UE, configuring, for the relay UE, a bearer and mapping configuration for the remote UE on the Uu interface of the relay UE. This allows the SRB1 message to be sent to the base station through a configured Uu pipeline and continues subsequent forwarding transmission of other signaling and data.

However, the above R17 process for triggering the relay UE may not be reliably used in the R18 multi-path architecture. Because the R17 scenario is path switching, the path after reconfiguration is only the relay link, guaranteeing that the SRB1 message of the remote UE, including the RRC reconfiguration complete message, is sent to the network side through the relay UE. In the R18 multi-path architecture, the reconfiguration process involves path addition, that is, adding an indirect/relay link while retaining the existing direct link. In this case, there are two paths available as options, and depending on different policies, the SRB1 message, including the RRC reconfiguration complete message, is highly likely to be sent directly to the network side by the remote UE through the direct link, making the R17 triggering method ineffective.

Therefore, when the R17 triggering method is ineffective, the new PC5 RRC triggering method provided by the embodiments of this application can be used, where the remote UE notifies the relay UE to perform state transition through a PC5 RRC message, ensuring that the relay UE enters the connected state to provide forwarding services for the remote UE.

In the path establishment method provided in the embodiments of this application, the first UE determines whether to send a PC5 radio resource control RRC message to the relay UE based on a transmission path configuration of a radio bearer SRB1 carrying Uu signaling, where the PC5 RRC message is used to trigger the relay UE to enter a connected state. A transmission path corresponding to the transmission path configuration of the SRB1 carrying Uu signaling includes at least one of the following: an indirect path between the first UE and the network-side device, and a direct path between the first UE and the network-side device; where the indirect path includes a PC5 link between the first UE and the relay UE and a Uu link between the relay UE and the network-side device. In this method, based on the transmission path configuration of the SRB1 between the first UE and the network-side device, the first UE can determine whether to send a PC5 RRC message dedicated to triggering the relay UE to enter the connected state, so that the relay UE can be triggered to enter the connected state regardless of whether the transmission path of the SRB1 between the first UE and the network-side device is a direct path or an indirect path, thereby ensuring successful multipath establishment for the first UE.

Optionally, in this embodiment of this application, the transmission path configuration is used to configure a transmission path of the SRB1. Optionally, the transmission path configuration may be configured by the network-side device.

Optionally, step S201 may include the following step S201a1 or S201a2.

Step S201a1: In a case that it is determined that the transmission path is the direct path, the first UE sends the PC5 RRC message to the relay UE.

Step S201a2: In a case that it is determined that the transmission path is the indirect path, the first UE does not send the PC5 RRC message to the relay UE.

For example, in a case that the network-side device configures the transmission path of the SRB1 as a direct path, the first UE may send the PC5 RRC message to the relay UE based on the transmission path configuration of the SRB1; or in a case that the network-side device configures the transmission path of the SRB 1 as an indirect path, the first UE may not send the PC5 RRC message to the relay UE based on the transmission path configuration of the SRB1.

Further, the first UE may not send the PC5 RRC message to the relay UE based on the transmission path configuration of the SRB1, and the first UE may reuse the R17 method of triggering the relay UE to enter the connected state by sending an RRC reconfiguration complete message on the indirect path.

It can be understood that when the transmission path of SRB1 is configured as a direct path, since the RRC reconfiguration complete message carried by the SRB1 may not reach the relay UE through an indirect path, the relay UE cannot be triggered to enter the connected state through this RRC reconfiguration complete message. In this case, a new PC5 RRC procedure can be used to trigger the relay UE to enter the connected state, that is, the PC5 RRC message is sent to the relay UE, and the relay UE can be triggered to enter the connected state through the PC5 RRC message. When the transmission path of the SRB1 is configured as an indirect path, the RRC reconfiguration complete message carried by the SRB1 may reach the relay UE through the indirect path, allowing reuse of the R17 triggering method in this case, where the remote UE can trigger the target relay UE to enter the connected state using the R17 method without requiring a new PC5 RRC process.

Optionally, in this embodiment of this application, after step S201a1, the path establishment method provided in this embodiment of this application further includes the following step S201b.

Step S201b: The relay UE receives the PC5 RRC message sent by the first UE.

For example, the relay UE receives the PC5 RRC message sent by the first UE through a PC5 interface, and is triggered through the PC5 RRC message to enter the connected state, so as to provide forwarding services for the first UE even when the RRC reconfiguration complete message sent by the first UE cannot be received.

Optionally, in this embodiment of this application, the transmission path configuration is used to configure a transmission path of the SRB1. Step S201 may include the following step S201b1 or step S201b2.

Step S201b1: In a case that the transmission path includes the direct path and the indirect path, the first UE does not send the PC5 RRC message to the relay UE if the 1st uplink RRC message or an RRC reconfiguration complete message carried by the SRB1 is transmitted on the indirect path after the indirect path is established; or sends the PC5 RRC message to the relay UE if the 1st uplink RRC message or the RRC reconfiguration complete message carried by the SRB1 is transmitted on the direct path.

Optionally, the SRB1 can use a split bearer (split bearer), and in the split bearer mode, the SRB1 may be transmitted on both the direct path and the indirect path.

Step S201b2: In a case that the transmission path includes the direct path or the indirect path, the first UE does not send the PC5 RRC message to the relay UE if the 1st uplink RRC message or an RRC reconfiguration complete message carried by the SRB1 is transmitted on the indirect path after the indirect path is established; or sends the PC5 RRC message to the relay UE if the 1st uplink RRC message or the RRC reconfiguration complete message carried by the SRB1 is transmitted on the direct path.

Optionally, the direct path and the indirect path are two transmission paths of the split bearer.

For example, in a case that the SRB1 is configured as a split bearer, if the 1st uplink RRC message or the RRC reconfiguration complete message carried by the SRB1 is transmitted on a PC5 link between the first UE and the relay UE after establishment of the PC5 link (or multipath), the first UE does not send a PC5 RRC message to trigger the relay UE to enter the connected state, but may trigger the relay UE to enter the connected state through the RRC reconfiguration complete message; or if the 1st uplink RRC message or the RRC reconfiguration complete message is only transmitted on the direct link and not on the PC5 link, the first UE sends a PC5 RRC message to the relay UE to trigger the relay UE to enter the connected state.

For example, in a case that the transmission path of the SRB1 is configured to allow random selection between the direct path and the indirect path, if the 1st uplink RRC message or the RRC reconfiguration complete message after the PC5 link is established is transmitted on the indirect path, the PC5 RRC message is not sent to the relay UE; or if the 1st uplink RRC message or the RRC reconfiguration complete message is transmitted only on the direct link and not on the PC5 link (or multipath), the PC5 RRC message is sent to the relay UE to trigger the relay UE to enter the connected state.

It should be noted that the 1st uplink RRC message or the RRC reconfiguration complete message after reconfiguration can be specially processed, meaning that, except for specific provisions for the 1st uplink RRC message or the RRC reconfiguration complete message transmitted on the SRB1, other messages transmitted on the SRB1 follow a different rule. For example, the transmission path of the SRB1 may be configured as a direct link, while the transmission path for the 1st uplink RRC message or the RRC reconfiguration complete message is an indirect link, and the transmission path for other messages transmitted on the SRB1 after the 1st uplink RRC message or the RRC reconfiguration complete message is a direct link.

Optionally, in this embodiment of this application, before step S201, the path establishment method provided in the embodiment of this application further includes the following steps S202 and S203.

Step S202: The first UE receives a reconfiguration message sent by the network-side device.

The reconfiguration message includes configuration information related to addition of an indirect path.

Step S203: The first UE establishes a PC5 connection between the first UE and the relay UE based on the reconfiguration message.

Optionally, before step S202, the network-side device may send a reconfiguration message to the first UE.

Optionally, the network-side device may be a base station or a core network device.

Optionally, the reconfiguration message may be an RRC reconfiguration message.

Optionally, in this embodiment of this application, in a case that the transmission path configuration of the SRB1 satisfies a first condition, the first UE determines, based on the transmission path configuration of the SRB1 carrying Uu signaling, not to send the PC5 RRC message to the relay UE; where the first condition includes any one of the following:
a single transmission path of the SRB1 is configured as the indirect path;
the SRB1 is configured to be transmitted on the direct path and the indirect path through a split bearer mode, and a primary path is the indirect path;
the SRB1 is configured to be transmitted on the direct path and the indirect path through a split bearer mode, and the SRB1 is in a duplication mode;
the SRB1 is configured to be transmitted on the direct path and the indirect path through a split bearer mode, the primary path is the direct path, and the SRB1 is for transmission on the indirect path independently or in duplication; and
the 1st uplink RRC message or the RRC reconfiguration complete message carried by the SRB1 is configured to be transmitted on the indirect path.

For example, the relay link may include an RLC channel configuration of part of DRBs or SRBs, and the RLC channel of the SRB1 is configured to be transmitted only on the indirect link, thereby ensuring that the SRB1 message, including the RRC reconfiguration complete message, is transmitted through the relay UE.

It should be noted that in this case, the R17 triggering method can be fully reused, and the remote UE can trigger the target relay UE using the R17 method to enter the connected state, without requiring a new PC5 RRC triggering process.

For example, the SRB1 is configured as a split bearer, that is, it has two RLC channels transmitted on the direct link and the indirect link respectively, with a duplication (duplication) mode enabled, or the duplication mode is enabled only for the RRC reconfiguration complete message.

It should be noted that when duplication mode is enabled, all data is duplicated and transmitted on both bearers.

It should be noted that in this case, the SRB1 message, including the RRC reconfiguration complete message, may be transmitted on both the direct link and the indirect link in the duplication mode, that is, one message is duplicated into two copies and transmitted on both paths and the RRC reconfiguration complete message is also transmitted through the relay UE. Therefore, the R17 triggering method can also be reused, and the remote UE can trigger the target relay UE using the R17 method to enter the connected state, without requiring a new PC5 RRC triggering process.

For example, the SRB1 is configured as a split bearer, that is, it has two RLC channels transmitted on the direct link and the indirect link respectively, without duplication mode enabled, and the indirect link is a primary path, ensuring that the SRB1 message, including the RRC reconfiguration complete message, is transmitted through the relay UE.

It should be noted that, in this case, the R17 triggering method can be fully reused, and the remote UE can trigger the target relay UE using the R17 method to enter the connected state, without requiring a new PC5 RRC triggering process.

For example, the SRB1 is configured as a split bearer, that is, it has two RLC channels transmitted on the direct link and the indirect link respectively, without duplication mode enabled, and the direct link is the default or configured primary path. However, it can be specified by the standard or network configuration that the RRC reconfiguration complete message is an exception and can be transmitted separately or in duplication on the indirect link, ensuring that the RRC reconfiguration complete message can be transmitted through the relay UE.

It should be noted that, in this case, the R17 triggering method can be fully reused, and the remote UE can trigger the target relay UE using the R17 method to enter the connected state, without requiring a new PC5 RRC triggering process.

For example, the 1st uplink RRC message or the RRC reconfiguration complete message carried by the SRB1 can be specially processed, that is, only the 1st uplink RRC message or the RRC reconfiguration complete message carried by the SRB1 is configured to be transmitted on the indirect path, while other messages carried on the SRB1 afterward can be transmitted on the direct path.

It should be noted that, in this case, the SRB1 message, including the RRC reconfiguration complete message, can be forwarded by the relay UE, meaning that the R17 triggering method can be reused without requiring a new PC5 RRC process to trigger the relay UE to enter the connected state.

Optionally, in this embodiment of this application, in a case that the transmission path configuration of the SRB1 satisfies a second condition, the first UE determines, based on the transmission path configuration of the SRB1 carrying Uu signaling, to send the PC5 RRC message to the relay UE; where the second condition includes any one of the following:
a single transmission path of the SRB1 is configured as the direct path;
the SRB1 is configured to be transmitted on the direct path and the indirect path through a split bearer mode, and a primary path is the direct path;
the 1st uplink RRC message or the RRC reconfiguration complete message carried by the SRB1 is configured to be transmitted on the direct path.

For example, the relay link may include an RLC channel configuration of part of DRBs or SRBs, and the RLC channel of the SRB1 is configured to be transmitted only on the direct link.

It should be noted that in this case, the SRB1 message including the RRC reconfiguration complete message may not be forwarded through the relay UE, meaning that the R17 triggering method cannot be used, and the remote UE can trigger the relay UE using a new PC5 RRC process to enter the connected state.

For example, the SRB1 is configured as a split bearer, that is, it has two RLC channels transmitted on the direct link and the indirect link respectively, without duplication mode enabled, and the direct link is the primary path, so the SRB1 message, including the RRC reconfiguration complete message, cannot be transmitted through the relay UE, and the remote UE can trigger the relay UE to enter the connected state through a new PC5 RRC process.

For example, the 1st uplink RRC message or the RRC reconfiguration complete message carried by the SRB1 can be specially processed, that is, only the 1st uplink RRC message or the RRC reconfiguration complete message carried by the SRB1 is configured to be transmitted on the direct path, while other messages carried on the SRB1 afterward can be transmitted on the indirect path.

It should be noted that in this case, the SRB1 message including the RRC reconfiguration complete message may not be forwarded through the relay UE, meaning that the R17 triggering method cannot be used, and the remote UE can trigger the relay UE using a new PC5 RRC process to enter the connected state.

Optionally, in this embodiment of this application, step S201 may include the following step S201c1.

Step S201c1: In a case that all relay UEs in a default network support a first function by default, the first UE determines, based on the transmission path configuration of the signaling radio bearer SRB1 carrying Uu signaling, whether to send the PC5 RRC message to the relay UE.

The first function is a relay function or a multipath function of a first standard version.

Optionally, the first standard version may include at least one of the R18 standard version and standard versions subsequent to R18.

For ease of understanding and description, in this embodiment of this application, the relay function or multipath function of the first standard version is collectively referred to as the R18 multi-path function.

Optionally, in this embodiment of this application, before step S201, the path establishment method provided in the embodiment of this application further includes the following step S204.

Step S204: The first UE receives a first message from the relay UE.

The first message carries at least one of a version information indication and a capability information indication;
the version information indication is used to indicate version information of the relay UE; and
the capability information indication is used to indicate whether the relay UE supports a first function, where the first function is a relay function or a multipath function of a first standard version.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

It should be noted that since the method for triggering the relay UE by using new PC5 RRC to enter the connected state cannot work for relay UEs of the R17 version or relay UEs that do not support the R18 multi-path capability, distinguishing the version or capability of the relay UE can make the selection or triggering process of the relay UE more effective.

In some embodiments, in the PC5 discovery (discovery) message, version information or capability information indication of the relay UE is added. For example, 1 bit or more bits are added to the PC5 discovery message to distinguish whether the relay UE supports the R18 multi-path function.

It should be noted that the remote UE and the relay UE initially discover each other through the discovery process to exchange information related to relay services and capabilities. Therefore, during the discovery process, the version information or capability information of the relay UE can be carried, enabling the remote UE to obtain the capability information of the relay UE in a timely manner.

Further, in the RRC container (Container) of the discovery message, such as SL-AccessInfo-L2U2N-r17, or CellAccessRelatedInfo, or SL-ServingCellInfo-r17, the version information or capability information indication of the relay UE is added, for example, using 1 bit or more bits to distinguish whether the relay UE supports the R18 multi-path function.

In some embodiments, the version information or capability information indication of the relay UE is added to a PC5-S message. For example, 1 bit or more bits are added to the PC5-S discovery message to distinguish whether the relay UE supports the R18 multi-path function.

It should be noted that the discovery message is an earliest interaction message between the remote UE and the relay UE. After the discovery process, a PC5-S message process, such as a Direct Communication Request (DCR) process, may follow to establish PC5-S. Therefore, version information or capability information indication of the relay UE can alternatively be added during the PC5-S message process, for example, using 1 bit or more bits to distinguish whether the relay UE supports the R18 multi-path function.

In some embodiments, the discovery message may also be merged with the DCR process into a combined process. During the combined process, the version information or capability information indication of the relay UE can be added, for example, using 1 bit or more bits to distinguish whether the relay UE supports the R18 multi-path function. In summary, obtaining the capability of the relay UE as early as possible through the discovery or DCR process facilitates subsequent selection.

In some embodiments, the version information or capability information of the relay UE is sent through a PC5-RRC message.

It should be noted that enhancing the discovery or DCR process requires new standardization efforts. To avoid introducing new fields, existing processes can be reused. That is, without changing the discovery or DCR process and information, after completing the initial PC5-S process, the two UEs need to perform a PC5-RRC process, one of which is capability exchange between the two UEs. Standard versions of R18 or later can introduce new capability information for multipath for the remote UE or relay UE, allowing the capability exchange to determine whether the relay UE supports the multipath function.

In this way, the remote UE can learn whether the relay UE supports the multipath function, that is, whether the relay UE can support additional behaviors introduced for multipath, for example, the new PC5 RRC triggers the relay UE to enter the connected state, thereby preparing for subsequent selection and processes.

Optionally, in this embodiment of this application, step S204 can be implemented through the following step S204a.

Step S204a: In a case that relay UE supporting the first function and relay UE only supporting a relay function of a second standard version but not supporting the first function are present in a network, the first UE receives the first message from the relay UE.

Optionally, the second standard version may include at least one of the R17 standard version and standard versions prior to R17.

It should be noted that explanations regarding the first function can refer to the above descriptions and are not repeated here.

Since the R17 SL relay has not yet been actually deployed, it is uncertain whether relay UEs in the R17 SL relay system have capabilities distinguished as supporting or not supporting the multipath function. Therefore, the following possible implementation methods may exist.

In some possible implementations, it is assumed that all relay UEs in the system support both the basic R17 U2N function and the extended R18 U2N function, which includes the multipath function. Therefore, there is no need to distinguish between R17 and R18, and any UE with the relay capability is assumed to support multipath by default, that is, supports triggering it using new PC5 RRC to enter the connected state.

In this assumption, there is no need for additional multipath capability information exchange between the two UEs. The network-side device can flexibly perform path configuration for the SRB1 of the remote UE based on its algorithms, policies, and requirements. When the SRB1 path allows the RRC reconfiguration complete message to be transmitted through the relay UE, the message triggers the relay UE to enter the connected state; otherwise, new PC5 RRC is used to trigger the relay UE to enter the connected state.

In some possible implementations, there are two types of relay UEs in the network: one type only supports the R17 SL relay capability, and the other type supports the multipath capability in addition to the R17 capability, that is, the relay UE can recognize the new PC5 RRC for triggering it to enter the connected state.

In this case, the two UEs can exchange multipath capability information, and the capability information of the relay UE can also be reported to the network-side device, enabling the network-side device to perform correct configuration based on the capability information of the relay UE. For example, for relay UE supporting the multipath capability, the network-side device can configure the transmission path for the SRB1, especially for the RRC reconfiguration complete message, based on actual needs. For relay UE that does not support multipath capability, the network-side device needs to ensure that the SRB1, especially the RRC reconfiguration complete message, is transmitted through the relay UE to avoid a multipath configuration failure caused by that the relay UE cannot enter the connected state due to inability of the relay UE to support triggering through new PC5 RRC.

In some possible implementations, in a case that there are two types of relay UE capabilities, the network-side device can ensure that the SRB1 has at least the RLC channel (RLC channel) configuration for the indirect link. Whether the RRC reconfiguration complete message is mandatorily transmitted through the relay UE can be determined by the remote UE. That is, if the remote UE knows that the relay UE supports multipath capability, it can determine the transmission path of the complete message according to existing rules. If the complete message is not transmitted via the relay UE, a new PC5 RRC field or message is triggered. If the remote UE knows that the relay UE does not support the multipath capability, it can override existing rules or configure an indicated path to migrate the complete message from the direct link to the indirect link for transmission, or perform duplication transmission on both links to reuse the existing trigger method. Alternatively, when there are two types of relay UE capabilities, the network-side configuration or default rules ensure that the RRC reconfiguration complete message is transmitted through the relay UE, to avoid using new PC5 RRC to trigger the relay UE to perform state transition.

In this way, different solutions are provided based on the capabilities of UEs in the system, enabling a more efficient multipath addition process.

This embodiment of this application provides a method for indicating UE capability information, and the method for indicating UE capability information may include the following steps A1 and A2.

Step A1: The relay UE sends a first message to the first UE.

Step A2: The first UE receives the first message sent by the relay UE.

The first message carries at least one of a version information indication and a capability information indication;
the version information indication is used to indicate version information of the relay UE; and
the capability information indication is used to indicate whether the relay UE supports a first function, where the first function is a relay function or a multipath function of a first standard version.

It should be noted that explanations for this part of the embodiments can specifically refer to the related explanations in the above embodiments, and are not repeated here.

Optionally, in this embodiment of this application, before step S201, the path establishment method provided in the embodiment of this application further includes the following step S205.

Step S205: The first UE determines a potential relay UE that satisfies a reporting condition, and reports a measurement result of the potential relay UE based on a reporting rule.

Optionally, the reporting condition is configured by the network-side device for the first UE.

For example, the network-side device configures measurements for the remote UE. For instance, if the remote UE obtains through measurement a potential relay UE with a reference signal received power (Reference Signal Received Power, RSRP) being higher than a threshold, it triggers reporting to the network-side device, such as in a case of Event Y2 (Candidate L2 U2N Relay UE becomes better than threshold), or if the remote UE detects that the serving cell is degrading while potential relay UEs are present, such as in a case of Event Y1 (PCell becomes worse than threshold1 and candidate L2 U2N Relay UE becomes better than threshold2). After these measurement events are triggered, the remote UE organizes a measurement report to report to the serving cell. Generally, Event Y1 triggers a D2I handover, while Event Y2 may trigger either a D2I handover or establishment of multipath or addition of a second indirect path.

To enhance subsequent reporting and enable the network-side device to learn the multipath capability information of the relay UE, the remote UE may report the capability information of the relay UE to the network-side device.

Optionally, the first UE can report, to the network-side device, the capability information of the relay UE and signal metrics of the cell where it is located. For example, the capability information can indicate whether the relay UE supports the R18 multi-path function.

Optionally, in this embodiment of this application, the reporting rule is explicitly indicated by the network-side device, or the reporting rule is a default or preconfigured rule.

For example, the network-side device explicitly indicates in the measurement configuration which events require enhanced reporting, or the network side directly indicates, through other dedicated signaling or common signaling, whether it supports enhanced reporting.

For example, the first UE can perform enhanced reporting based on a default or configured rule, such as triggering by Event Y1.

It should be noted that triggering Event Y1 indicates that the RSRP of the serving cell is below the threshold, making it less likely to configure multipath, so enhanced reporting is not necessary for Event Y1-triggered reports. However, if Event Y2 is triggered and the RSRP of the serving cell is above the default or configured RSRP threshold, it can be determined that configuring multipath is more likely, and enhanced information reporting is needed.

It should be noted that the above two methods can be used simultaneously, that is, the network first informs the UE that it supports enhanced reporting, and the UE then performs enhanced reporting based on default rules.

Optionally, in this embodiment of this application, in a case that the potential relay UE includes at least one potential relay UE, the step S205 can be implemented through any one of the following steps S205a1 to S205a4.

Step S205a1: Use only relay UE supporting multipath in the at least one potential relay UE as candidate relay UE, and report a measurement result of the candidate relay UE.

Step S205a2: Use a potential relay UE supporting multipath in the at least one potential relay UE as a high-priority candidate relay UE, and preferentially report a measurement result of the candidate relay UE.

Step S205a3: Report a measurement result of at least one potential relay UE and the capability indication information of the at least one potential relay UE.

The capability indication information indicates whether the potential relay UE supports multipath transmission.

Step S205a4: In a case that the at least one potential relay UE includes a plurality of potential relay UEs, perform reporting separately in different lists or fields for a potential relay UE supporting multipath transmission and a potential relay UE not supporting multipath transmission in the plurality of potential relay UEs.

In some implementations, the first UE may select only relay UEs supporting the R18 multi-path function as candidate relay UEs for its multipath and report their measurement results and L2 ID information to the network side.

In some implementations, the first UE preferentially selects relay UEs supporting the R18 multi-path function as high-priority candidate relay UEs, placing their measurement results and L2 ID information at the forefront of the measurement result list reported to the network side, with information of other non-supporting UEs placed later, arranging candidate relay UEs in descending order of priority.

In some implementations, when reporting candidate relay UEs to the network side, the first UE includes an explicit indication of whether the relay UE supports the R18 multi-path function, that is, adding a field to the measurement results and Layer 2 ID information to indicate whether the relay UE supports multipath.

It should be noted that the Layer 2 ID can be abbreviated as L2 ID, translated as layer 2 identifier, specifically used for UE identification in the SL or PC5 interface, typically carried in a MAC header (header) with a source Layer-2 ID (Source Layer-2 ID) and a destination Layer-2 ID (Destination Layer-2 ID) to distinguish user data between one pair (One Pair) of UEs.

In some implementations, the first UE reports relay UEs supporting the R18 multi-path function in a separate field or list, distinguished from relay UEs not supporting this function. For example, all relay UEs supporting multipath are included in one list, reporting their measurement results and L2 ID information, while other relay UEs not supporting multipath are included in another list, reporting their measurement results and L2 ID information.

Through the above processes of this application, the serving cell of the remote UE can clearly distinguish whether the relay UE supports the R18 multi-path function, enabling correct configuration to ensure smooth execution of triggering the relay UE to enter the connected state.

An embodiment of this application provides an information reporting method, where the information reporting method may include the following step B1.

Step B1: The first UE determines a potential relay UE that satisfies a reporting condition, and reports a measurement result of the potential relay UE based on a reporting rule.

Optionally, the reporting condition is configured by the network-side device for the first UE.

It should be noted that explanations for this part of the embodiments can specifically refer to the above descriptions, and are not repeated here.

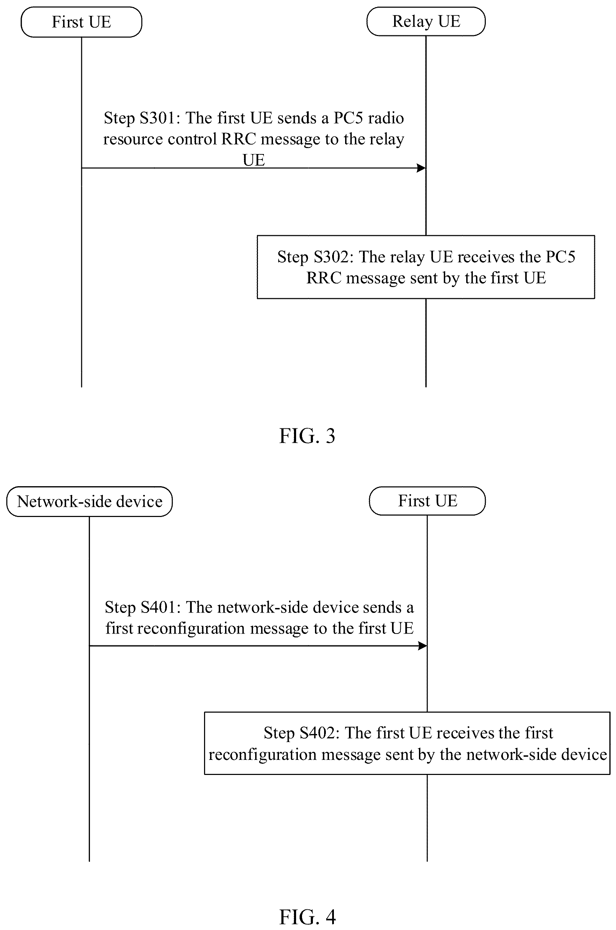

FIG. 3 is a flowchart of a path establishment method according to an embodiment of this application. As shown in FIG. 3, the path establishment method may include the following steps S301 and S302.

Step S301: First UE sends a PC5 radio resource control RRC message to relay UE.

Step S302: The relay UE receives the PC5 RRC message sent by the first UE.

The PC5 RRC message is used to trigger the relay UE to enter a connected state.

It should be noted that explanations regarding the PC5 RRC message can refer to the above descriptions and are not repeated here.

Optionally, in this embodiment of this application, before step S302, the path establishment method provided in the embodiment of this application further includes the following step S303.

Step S303: The relay UE sends a first message to the first UE.

The first message carries at least one of a version information indication and a capability information indication.

The version information indication is used to indicate version information of the relay UE; and the version information may indicate whether the relay UE supports the first function.
the capability information indication indicates whether the relay UE supports a first function, where the first function is a relay function or a multipath function of a first standard version.

Optionally, the first standard version may include at least one of the R18 standard version and standard versions subsequent to R18.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

It should be noted that explanations regarding the first message can refer to the above descriptions and are not repeated here.

Optionally, in this embodiment of this application, step S303 may include the following step S303a1.

Step S303a1: In a case that relay UE supporting the first function and relay UE only supporting a relay function of a second standard version but not supporting the first function are present in a network, the relay UE sends the first message to the first UE.

It should be noted that explanations regarding the first function can refer to the above descriptions and are not repeated here.

It should be noted that explanations regarding related content of this embodiment can refer to the above descriptions and are not repeated here.

In the path establishment method provided in this embodiment of this application, the relay UE receives the PC5 RRC message sent by the first UE, and is triggered through the PC5 RRC message to enter the connected state, so as to provide forwarding services for the first UE even when the RRC reconfiguration complete message sent by the first UE cannot be received.

FIG. 4 is a flowchart of a path establishment method according to an embodiment of this application. As shown in FIG. 4, the path establishment method may include the following steps S401 and S402.

Step S401: A network-side device sends a first reconfiguration message to first UE.

Step S402: The first UE receives the first reconfiguration message sent by the network-side device.

The first reconfiguration message includes configuration information related to addition of an indirect path; and the first reconfiguration message is used to establish a PC5 connection between the first UE and the relay UE.

Optionally, in this embodiment of this application, before step S401, the path establishment method provided in the embodiment of this application further includes the following step S403.

Step S403: The network-side device sends a second configuration message to the first UE.

The second configuration message is used to configure a transmission path of a signaling radio bearer SRB1 carrying Uu signaling.

Optionally, the second configuration message may be an RRC message.

For example, the network-side device may configure the transmission path of the SRB1 and explicitly indicate the transmission path configuration of the SRB1 to the first UE.

It should be noted that explanations regarding the transmission path configuration of the SRB1 can refer to the above descriptions and are not repeated here.

Optionally, in this embodiment of this application, the transmission path corresponding to the transmission path configuration includes:
an indirect path between the first UE and the network-side device; and
a direct path between the first UE and the network-side device.

The indirect path includes a PC5 link between the first UE and the relay UE and a Uu link between the relay UE and the network-side device.

Optionally, in this embodiment of this application, a transmission path configuration of the SRB1 satisfies a first condition, and the first condition includes any one of the following:
a single transmission path of the SRB1 is configured as the indirect path;
the SRB1 is configured to be transmitted on the direct path and the indirect path through a split bearer mode, and a primary path is the indirect path;
the SRB1 is configured to be transmitted on the direct path and the indirect path through a split bearer mode, and the SRB 1 is in a duplication mode;
the SRB1 is configured to be transmitted on the direct path and the indirect path through a split bearer mode, the primary path is the direct path, and the SRB1 is for transmission on the indirect path independently or in duplication; and
the 1st uplink RRC message or the RRC reconfiguration complete message carried by the SRB1 is configured to be transmitted on the indirect path.

Optionally, in this embodiment of this application, a transmission path configuration of the SRB1 satisfies a second condition, and the second condition includes any one of the following:
a single transmission path of the SRB1 is configured as the direct path;
the SRB1 is configured to be transmitted on the direct path and the indirect path through a split bearer mode, and a primary path is the direct path;
the 1st uplink RRC message or the RRC reconfiguration complete message carried by the SRB1 is configured to be transmitted on the direct path.

It should be noted that explanations regarding the first condition and the second condition can refer to the above descriptions and are not repeated here.

Optionally, in this embodiment of this application, before step S401, the path establishment method provided in the embodiment of this application further includes the following step S404.

Step S404: The network-side device sends a third configuration message to the first UE.

The third configuration message carries at least one of indication information and a reporting rule;
the indication information is used to indicate whether the network-side device supports reporting a measurement result of potential relay UE; and
the reporting rule is used for the first UE to report the measurement result of the potential relay UE.

Optionally, the third configuration message may be an RRC message.

Optionally, in this embodiment of this application, the reporting rule includes any one of the following:
in a case that there is at least one potential relay UE, using only relay UE supporting multipath in the at least one potential relay UE as candidate relay UE, and reporting a measurement result of the candidate relay UE; or
in a case that there is at least one potential relay UE, using a potential relay UE supporting multipath in the at least one potential relay UE as a high-priority candidate relay UE, and preferentially reporting a measurement result of the candidate relay UE; or
in a case that there is at least one potential relay UE, reporting a measurement result of the at least one potential relay UE and capability indication information of the at least one potential relay UE, where the capability indication information indicates whether the potential relay UE supports multipath transmission; or
in a case that there are a plurality of potential relay UEs, performing reporting in different lists or fields separately for a potential relay UE supporting multipath transmission and a potential relay UE not supporting multipath transmission in the plurality of potential relay UEs.

It should be noted that explanations regarding the reporting rule can refer to the above descriptions and are not repeated here.

In the path establishment method provided in this embodiment of this application, the network-side device can perform multipath configuration and enhanced reporting configuration for the first UE during multipath establishment, thereby ensuring that the relay UE can be triggered to enter the connected state during multipath establishment, ensuring successful multipath establishment, and improving the experience and system efficiency of the UE side under the premise of ensuring successful multipath establishment.

The execution subject of the path establishment method provided in the embodiments of this application may be a path establishment apparatus. In the embodiments of this application, the path establishment apparatus provided in the embodiments of this application is described by using the path establishment method being executed by the path establishment apparatus as an example.

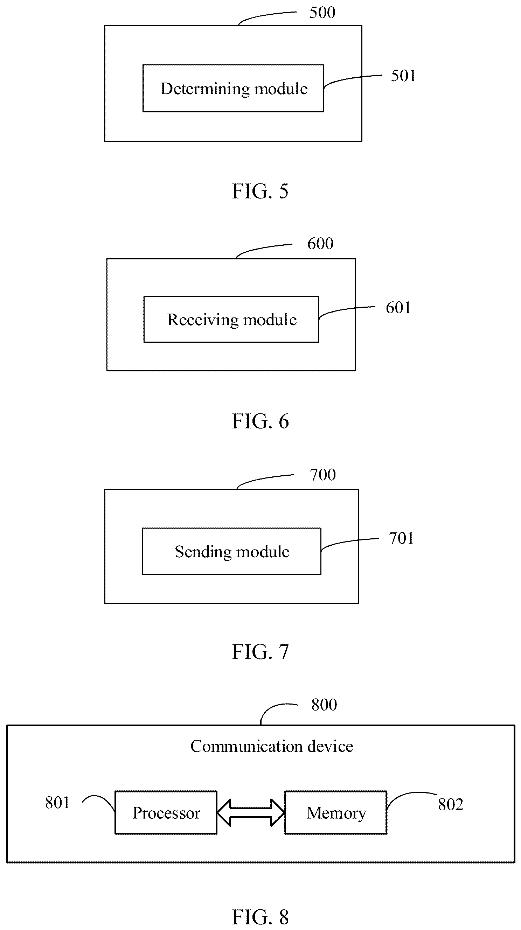

FIG. 5 is a schematic diagram of a path establishment apparatus provided in an embodiment of this application. As shown in FIG. 5, the path establishment apparatus 500 may include a determining module 501. The determining module 501 is configured to determine, based on a transmission path configuration of a signaling radio bearer SRB1 carrying Uu signaling, whether to send a PC5 radio resource control RRC message to relay UE, where the PC5 RRC message is used to trigger the relay UE to enter a connected state; where a transmission path corresponding to the transmission path configuration of the SRB1 carrying Uu signaling includes at least one of the following: an indirect path between the first UE and a network-side device, or a direct path between the first UE and the network-side device; where the indirect path includes a PC5 link between the first UE and the relay UE and a Uu link between the relay UE and the network-side device.

Optionally, in this embodiment of this application, the transmission path configuration is used to configure a transmission path of the SRB1. The determining module is specifically configured to send an RRC message to the relay UE in a case that the transmission path is a direct path; or the determining module is specifically configured to not send the PC5 RRC message to the relay UE in a case that it is determined that the transmission path is an indirect path.

Optionally, in this embodiment of this application, the transmission path configuration is used to configure the transmission path of the SRB1.

The determining module is specifically configured to: in a case that the transmission path includes the direct path and the indirect path, not send a PC5 RRC message to the relay UE if the 1st uplink RRC message or an RRC reconfiguration complete message carried by the SRB1 is transmitted on the indirect path after the indirect path is established; or send the PC5 RRC message to the relay UE if the 1st uplink RRC message or the RRC reconfiguration complete message carried by the SRB1 is transmitted on the direct path. Alternatively, the determining module is specifically configured to: in a case that the transmission path includes the direct path or the indirect path, not send the PC5 RRC message to the relay UE if the 1st uplink RRC message or an RRC reconfiguration complete message carried by the SRB1 is transmitted on the indirect path after the indirect path is established; or send the PC5 RRC message to the relay UE if the 1st uplink RRC message or the RRC reconfiguration complete message carried by the SRB1 is transmitted on the direct path.

Optionally, in this embodiment of this application, a message carried by the SRB1 includes an RRC reconfiguration complete message, the RRC reconfiguration complete message is a response message to an RRC reconfiguration message, and the RRC reconfiguration message includes configuration information related to addition of an indirect path.

Optionally, in this embodiment of this application, the apparatus further includes a receiving module and a processing module.

The receiving module is configured to receive the reconfiguration message sent by the network-side device, where the reconfiguration message includes configuration information related to addition of an indirect path. The processing module is configured to establish a PC5 connection between the first UE and the relay UE based on the reconfiguration message.

Optionally, in this embodiment of this application, in a case that the transmission path configuration of the SRB1 satisfies a first condition, the first UE determines, based on the transmission path configuration of the SRB1 carrying Uu signaling, not to send the PC5 RRC message to the relay UE; where the first condition includes any one of the following: a single transmission path of the SRB1 is configured as the indirect path; the SRB1 is configured to be transmitted on the direct path and the indirect path through a split bearer mode, and a primary path is the indirect path; the SRB1 is configured to be transmitted on the direct path and the indirect path through a split bearer mode, and the SRB1 is in a duplication mode; the SRB1 is configured to be transmitted on the direct path and the indirect path through a split bearer mode, the primary path is the direct path, and the SRB1 is for transmission on the indirect path independently or in duplication; and the 1st uplink RRC message or the RRC reconfiguration complete message carried by the SRB1 is configured to be transmitted on the indirect path.

Optionally, in this embodiment of this application, when the transmission path configuration of SRB1 meets a second condition, the first UE determines, based on the transmission path configuration of the SRB1 carrying Uu signaling, to send the PC5 RRC message to the relay UE; where the second condition includes any one of the following: a single transmission path of the SRB1 is configured as the direct path; the SRB1 is configured to be transmitted on the direct path and the indirect path through a split bearer mode, and a primary path is the direct path; and the 1st uplink RRC message or the RRC reconfiguration complete message carried by the SRB1 is configured to be transmitted on the direct path.

Optionally, in this embodiment of this application, the PC5 RRC message satisfies any one of the following:
the PC5 RRC message is a legacy PC5 RRC message; and
the PC5 RRC message is a newly added PC5 RRC message.

Optionally, in this embodiment of this application, the PC5 RRC message is a legacy PC5 RRC message, and the RRC message carries an indication field, where the indication field is used to indicate that the relay UE enters a connected state to provide forwarding services.

Optionally, in this embodiment of this application, the determining module is specifically configured to: in a case that all relay UEs in a default network support a first function by default, determine, for the first UE, based on the transmission path configuration of the signaling radio bearer SRB1 carrying Uu signaling, whether to send the PC5 RRC message to the relay UE; where the first function is a relay function or a multipath function of a first standard version.

Optionally, in this embodiment of this application, the apparatus further includes a receiving module. The receiving module is configured to receive a first message from the relay UE; where the first message carries at least one of version information indication and capability information indication. The version information indication is used to indicate version information of the relay UE; and the capability information indication is used to indicate whether the relay UE supports a first function, where the first function is a relay function or a multipath function of a first standard version.

Optionally, in this embodiment of this application, the receiving module is specifically configured to: receive, for the first UE, the first message from the relay UE in a case that relay UE supporting the first function and relay UE only supporting a relay function of a second standard version but not supporting the first function are present in a network.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

Optionally, in this embodiment of this application, the apparatus further includes an execution module.

The execution module is configured to determine a potential relay UE that satisfies a reporting condition, and report, based on a reporting rule, a measurement result of the potential relay UE determined by the determining module.

Optionally, in this embodiment of this application, in a case that the potential relay UE includes at least one potential relay UE, the execution module is specifically configured to use only relay UE supporting multipath in the at least one potential relay UE as candidate relay UE, and report a measurement result of the candidate relay UE; or
the execution module is specifically configured to use a potential relay UE supporting multipath in the at least one potential relay UE as a high-priority candidate relay UE, and preferentially report a measurement result of the candidate relay UE; or
the execution module is specifically configured to report a measurement result of the at least one potential relay UE and capability indication information of the at least one potential relay UE, where the capability indication information indicates whether the potential relay UE supports multipath transmission; or
the execution module is specifically configured to: in a case that the at least one potential relay UE includes a plurality of potential relay UEs, perform reporting separately in different lists or fields for a potential relay UE supporting multipath transmission and a potential relay UE not supporting multipath transmission in the plurality of potential relay UEs.

Optionally, in this embodiment of this application, the reporting rule is explicitly indicated by the network-side device, or the reporting rule is a default or preconfigured rule.

According to the path establishment apparatus provided in the embodiments of this application, the first UE determines whether to send a PC5 radio resource control RRC message to the relay UE based on a transmission path configuration of a radio bearer SRB1 carrying Uu signaling, where the PC5 RRC message is used to trigger the relay UE to enter a connected state. A transmission path corresponding to the transmission path configuration of the SRB1 carrying Uu signaling includes at least one of the following: an indirect path between the first UE and the network-side device, and a direct path between the first UE and the network-side device; where the indirect path includes a PC5 link between the first UE and the relay UE and a Uu link between the relay UE and the network-side device. In this method, based on the transmission path configuration of the SRB1 between the first UE and the network-side device, the first UE can determine whether to send a PC5 RRC message dedicated to triggering the relay UE to enter the connected state, so that the relay UE can be triggered to enter the connected state regardless of whether the transmission path of the SRB1 between the first UE and the network-side device is a direct path or an indirect path, thereby ensuring successful multipath establishment for the first UE.

FIG. 6 is a schematic structural diagram of another path establishment apparatus provided in an embodiment of this application. As shown in FIG. 6, the path establishment apparatus 600 may include a receiving module 601. The receiving module 601 is configured to receive a PC5 radio resource control RRC message sent by first UE, where the PC5 RRC message is used to trigger relay UE to enter a connected state.

Optionally, in this embodiment of this application, the apparatus further includes a sending module. The sending module is configured to send a first message to the first UE.

The first message carries at least one of a version information indication and a capability information indication.

The version information indication is used to indicate version information of the relay UE; and
the capability information indication is used to indicate whether the relay UE supports a first function, where the first function is a relay function or a multipath function of a first standard version.

Optionally, in this embodiment of this application, the sending module is specifically configured to: send the first message to the first UE in a case that relay UE supporting the first function and relay UE only supporting a relay function of a second standard version but not supporting the first function are present in a network.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

In the path establishment apparatus provided in this embodiment of this application, the relay UE receives the PC5 RRC message sent by the first UE, and is triggered through the PC5 RRC message to enter the connected state, so as to provide forwarding services for the first UE even when the RRC reconfiguration complete message sent by the first UE cannot be received.

FIG. 7 is a schematic structural diagram of another path establishment apparatus provided in an embodiment of this application. As shown in FIG. 7, the path establishment apparatus 700 may include a sending module 701. The sending module 701 is configured to send a first reconfiguration message to first UE. The first reconfiguration message includes configuration information related to addition of an indirect path; and the first reconfiguration message is used to establish a PC5 connection between the first UE and the relay UE.

Optionally, in this embodiment of this application, the sending module 701 is further configured to send a second configuration message to the first UE.

The second configuration message is used to configure a transmission path of a signaling radio bearer SRB1 carrying Uu signaling.

Optionally, in this embodiment of this application, the transmission path corresponding to the transmission path configuration includes at least one of the following:
an indirect path between the first UE and a network-side device; and
a direct path between the first UE and the network-side device.

The indirect path includes a PC5 link between the first UE and the relay UE and a Uu link between the relay UE and the network-side device.

Optionally, in this embodiment of this application, a transmission path configuration of the SRB1 satisfies a first condition, and the first condition includes any one of the following:
a single transmission path of the SRB1 is configured as the indirect path;
the SRB1 is configured to be transmitted on the direct path and the indirect path through a split bearer mode, and a primary path is the indirect path;
the SRB1 is configured to be transmitted on the direct path and the indirect path through a split bearer mode, and the SRB1 is in a duplication mode;
the SRB1 is configured to be transmitted on the direct path and the indirect path through a split bearer mode, the primary path is the direct path, and the SRB1 is for transmission on the indirect path independently or in duplication; and
the 1st uplink RRC message or the RRC reconfiguration complete message carried by the SRB1 is configured to be transmitted on the indirect path.

Optionally, in this embodiment of this application, a transmission path configuration of the SRB1 satisfies a second condition, and the second condition includes any one of the following:
a single transmission path of the SRB1 is configured as the direct path;
the SRB1 is configured to be transmitted on the direct path and the indirect path through a split bearer mode, and a primary path is the direct path;
the 1st uplink RRC message or the RRC reconfiguration complete message carried by the SRB1 is configured to be transmitted on the direct path.

Optionally, in this embodiment of this application, the sending module is further configured to send a third configuration message to the first UE.

The third configuration message carries at least one of indication information and a reporting rule;
the indication information is used to indicate whether the network-side device supports reporting a measurement result of potential relay UE; and
the reporting rule is used for the first UE to report the measurement result of the potential relay UE.

Optionally, in this embodiment of this application, the reporting rule includes any one of the following:
in a case that there is at least one potential relay UE, using only relay UE supporting multipath in the at least one potential relay UE as candidate relay UE, and reporting a measurement result of the candidate relay UE; or
in a case that there is at least one potential relay UE, using a potential relay UE supporting multipath in the at least one potential relay UE as a high-priority candidate relay UE, and preferentially reporting a measurement result of the candidate relay UE; or
in a case that there is at least one potential relay UE, reporting a measurement result of the at least one potential relay UE and capability indication information of the at least one potential relay UE, where the capability indication information indicates whether the potential relay UE supports multipath transmission; or
in a case that there are a plurality of potential relay UEs, performing reporting in different lists or fields separately for a potential relay UE supporting multipath transmission and a potential relay UE not supporting multipath transmission in the plurality of potential relay UEs.

In the path establishment method provided in this embodiment of this application, the network-side device can perform multipath configuration and enhanced reporting configuration for the first UE during multipath establishment, thereby ensuring that the relay UE can be triggered to enter the connected state during multipath establishment, ensuring successful multipath establishment, and improving the experience and system efficiency of the UE side under the premise of ensuring successful multipath establishment.

The path establishment apparatus in this embodiment of this application may be an electronic device, such as an electronic device with an operating system, or a component in the electronic device, such as an integrated circuit or a chip. The electronic device may be a terminal (or UE) or a device other than terminals. For example, the terminal may include, but is not limited to, the types of the terminal 11 listed above, and other devices may be a server, a network attached storage (Network Attached Storage, NAS), and the like. This is not limited in the embodiments of this application.

The path establishment apparatus provided in this embodiment of this application can implement the processes implemented in the method embodiment in FIG. 1 to FIG. 4, with the same technical effects achieved. To avoid repetition, details are not described herein again.

As shown in FIG. 8, an embodiment of this application further provides a communication device 800. The communication device 800 may be first UE or relay UE, including a processor 801 and a memory 802. A program or instructions capable of running on the processor 801 are stored in the memory 802. For example, when the communication device 800 is a terminal and when the program or the instructions are executed by the processor 801, the steps of the foregoing embodiments of the path establishment method are implemented, with the same technical effects achieved. When the communication device 800 is a network-side device and when the program or the instructions are executed by the processor 801, the steps of the foregoing embodiments of the path establishment method are implemented, with the same technical effects achieved. To avoid repetition, details are not described herein again.

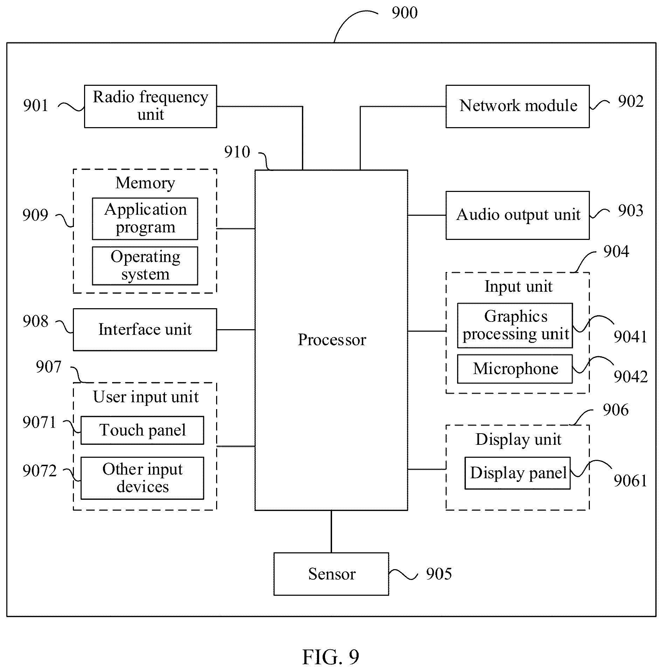

Using the first UE and the relay UE in the embodiments of the application being a terminal as an example, an embodiment of this application further provides a terminal, which includes a processor and a communication interface, where the communication interface is coupled to the processor, and the processor is configured to run a program or instructions to implement the steps of the method embodiments shown in FIG. 1 to FIG. 4. The terminal embodiment corresponds to the foregoing terminal side method embodiment, and the implementation processes and implementations of the foregoing method embodiments can be applied to the terminal embodiments, with the same technical effects achieved. Specifically, FIG. 9 is a schematic diagram of a hardware structure of a terminal implementing an embodiment of this application.

The terminal 900 includes but is not limited to at least part of components such as a radio frequency unit 901, a network module 902, an audio output unit 903, an input unit 904, a sensor 905, a display unit 906, a user input unit 907, an interface unit 908, a memory 909, and a processor 910.

Persons skilled in the art can understand that the terminal 900 may further include a power supply (for example, a battery) supplying power to the components, and the power supply may be logically connected to the processor 910 through a power management system. In this way, functions such as charge management, discharge management, and power consumption management are implemented by using the power management system. The structure of the terminal shown in FIG. 9 does not constitute any limitation on the terminal. The terminal may include more or fewer components than shown in the figure, or a combination of some components, or the components disposed differently. Details are not described herein again.

It can be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061. The display panel 9061 may be configured in a form of a liquid crystal display, an organic light-emitting diode display, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but be not limited to a physical keyboard, a function key (such as a volume control key or an on/off key), a trackball, a mouse, and a joystick. Details are not described herein.

In this embodiment of this application, after receiving downlink data from a network-side device, the radio frequency unit 901 sends the downlink data to the processor 910 for processing; and the radio frequency unit 901 also sends uplink data to the network-side device. Generally, the radio frequency unit 901 includes but is not limited to an antenna, an amplifier, a transceiver, a coupler, a low noise amplifier, a duplexer, and the like.

The memory 909 may be configured to store software programs or instructions and various data. The memory 909 may mainly include a first storage area for storing programs or instructions and a second storage area for storing data, where the first storage area may store an operating system, an application program or instructions required by at least one function (for example, an audio playing function and an image playing function), and the like. Further, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 909 described in the embodiments of this application is intended to include but is not limited to these and any other suitable types of memories.

The processor 910 may include one or more processing units. Optionally, the processor 910 may integrate an application processor and a modem processor. The application processor primarily processes operations involving an operating system, user interface, application program, or the like. The modem processor primarily processes radio communication, for example, being a baseband processor. It should be understood that alternatively, the modem processor may not be integrated into the processor 910.

In some embodiments of this application, using the first UE being a terminal as an example, the processor 910 is configured to determine, based on the transmission path configuration of the radio bearer SRB1 carrying Uu signaling, whether to send a PC5 radio resource control RRC message to the relay UE, where the PC5 RRC message is used to trigger the relay UE to enter the connected state. The transmission path corresponding to the transmission path configuration of the SRB1 carrying Uu signaling includes at least one of the following: an indirect path between the first UE and the network-side device, and a direct path between the first UE and the network-side device; where the indirect path includes a PC5 link between the first UE and the relay UE and a Uu link between the relay UE and the network-side device.

Optionally, in this embodiment of this application, the transmission path configuration is used to configure a transmission path of the SRB1. The processor 910 is specifically configured to send an RRC message to the relay UE in a case that the transmission path is a direct path; or the processor 910 is specifically configured to not send the PC5 RRC message to the relay UE in a case that it is determined that the transmission path is an indirect path.

Optionally, in this embodiment of this application, the transmission path configuration is used to configure the transmission path of the SRB1.

The processor 910 is specifically configured to: in a case that the transmission path includes the direct path and the indirect path, not send a PC5 RRC message to the relay UE if the 1st uplink RRC message or an RRC reconfiguration complete message carried by the SRB1 is transmitted on the indirect path after the indirect path is established; or send the PC5 RRC message to the relay UE if the 1st uplink RRC message or the RRC reconfiguration complete message carried by the SRB1 is transmitted on the direct path. Alternatively, the processor 910 is specifically configured to: in a case that the transmission path includes the direct path or the indirect path, not send the PC5 RRC message to the relay UE if the 1st uplink RRC message or an RRC reconfiguration complete message carried by the SRB1 is transmitted on the indirect path after the indirect path is established; or send the PC5 RRC message to the relay UE if the 1st uplink RRC message or the RRC reconfiguration complete message carried by the SRB1 is transmitted on the direct path.

Optionally, in this embodiment of this application, a message carried by the SRB1 includes an RRC reconfiguration complete message, the RRC reconfiguration complete message is a response message to an RRC reconfiguration message, and the RRC reconfiguration message includes configuration information related to addition of an indirect path.

Optionally, in this embodiment of this application, the apparatus further includes a radio frequency unit 901;

The radio frequency unit 901 is configured to receive the reconfiguration message sent by the network-side device, where the reconfiguration message includes configuration information related to addition of an indirect path. The processor 910 is further configured to establish a PC5 connection between the first UE and the relay UE based on the reconfiguration message.

Optionally, in this embodiment of this application, in a case that the transmission path configuration of the SRB1 satisfies a first condition, the first UE determines, based on the transmission path configuration of the SRB1 carrying Uu signaling, not to send the PC5 RRC message to the relay UE; where the first condition includes any one of the following: a single transmission path of the SRB1 is configured as the indirect path; the SRB1 is configured to be transmitted on the direct path and the indirect path through a split bearer mode, and a primary path is the indirect path; the SRB1 is configured to be transmitted on the direct path and the indirect path through a split bearer mode, and the SRB1 is in a duplication mode; the SRB1 is configured to be transmitted on the direct path and the indirect path through a split bearer mode, the primary path is the direct path, and the SRB1 is for transmission on the indirect path independently or in duplication; and the 1st uplink RRC message or the RRC reconfiguration complete message carried by the SRB1 is configured to be transmitted on the indirect path.

Optionally, in this embodiment of this application, when the transmission path configuration of SRB1 meets a second condition, the first UE determines, based on the transmission path configuration of the SRB1 carrying Uu signaling, to send the PC5 RRC message to the relay UE; where the second condition includes any one of the following: a single transmission path of the SRB1 is configured as the direct path; the SRB1 is configured to be transmitted on the direct path and the indirect path through a split bearer mode, and a primary path is the direct path; and the 1st uplink RRC message or the RRC reconfiguration complete message carried by the SRB1 is configured to be transmitted on the direct path.

Optionally, in this embodiment of this application, the PC5 RRC message satisfies any one of the following:
the PC5 RRC message is a legacy PC5 RRC message; and
the PC5 RRC message is a newly added PC5 RRC message.

Optionally, in this embodiment of this application, the PC5 RRC message is a legacy PC5 RRC message, and the RRC message carries an indication field, where the indication field is used to indicate that the relay UE enters a connected state to provide forwarding services.

Optionally, in this embodiment of this application, the processor 910 is specifically configured to: in a case that all relay UEs in a default network support a first function by default, determine, for the first UE, based on the transmission path configuration of the signaling radio bearer SRB1 carrying Uu signaling, whether to send the PC5 RRC message to the relay UE; where the first function is a relay function or a multipath function of a first standard version.

Optionally, in this embodiment of this application, the apparatus further includes a radio frequency unit 901. The radio frequency unit 901 is configured to receive a first message from the relay UE; where the first message carries at least one of version information indication and capability information indication. The version information indication is used to indicate version information of the relay UE; and the capability information indication is used to indicate whether the relay UE supports a first function, where the first function is a relay function or a multipath function of a first standard version.

Optionally, in this embodiment of this application, the radio frequency unit 901 is specifically configured to: receive, for the first UE, the first message from the relay UE in a case that relay UE supporting the first function and relay UE only supporting a relay function of a second standard version but not supporting the first function are present in a network.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

Optionally, in this embodiment of this application, the apparatus further includes an execution module.

The execution module is configured to determine a potential relay UE that satisfies a reporting condition, and report, based on a reporting rule, a measurement result of the potential relay UE determined by the processor 910.

Optionally, in this embodiment of this application, in a case that the potential relay UE includes at least one potential relay UE, the execution module is specifically configured to use only relay UE supporting multipath in the at least one potential relay UE as candidate relay UE, and report a measurement result of the candidate relay UE; or
the execution module is specifically configured to use a potential relay UE supporting multipath in the at least one potential relay UE as a high-priority candidate relay UE, and preferentially report a measurement result of the candidate relay UE; or
the execution module is specifically configured to report a measurement result of the at least one potential relay UE and capability indication information of the at least one potential relay UE, where the capability indication information indicates whether the potential relay UE supports multipath transmission; or
the execution module is specifically configured to: in a case that the at least one potential relay UE includes a plurality of potential relay UEs, perform reporting separately in different lists or fields for a potential relay UE supporting multipath transmission and a potential relay UE not supporting multipath transmission in the plurality of potential relay UEs.

Optionally, in this embodiment of this application, the reporting rule is explicitly indicated by the network-side device, or the reporting rule is a default or preconfigured rule.

According to the terminal provided in the embodiments of this application, the terminal determines whether to send a PC5 radio resource control RRC message to the relay UE based on a transmission path configuration of a radio bearer SRB1 carrying Uu signaling, where the PC5 RRC message is used to trigger the relay UE to enter a connected state. A transmission path corresponding to the transmission path configuration of the SRB1 carrying Uu signaling includes at least one of the following: an indirect path between the terminal and the network-side device, and a direct path between the first UE and the network-side device; where the indirect path includes a PC5 link between the terminal and the relay UE and a Uu link between the relay UE and the network-side device. In this method, based on the transmission path configuration of the SRB1 between the terminal and the network-side device, the terminal can determine whether to send a PC5 RRC message dedicated to triggering the relay UE to enter the connected state, so that the relay UE can be triggered to enter the connected state regardless of whether the transmission path of the SRB1 between the terminal and the network-side device is a direct path or an indirect path, thereby ensuring successful multipath establishment for the terminal.

In other embodiments of this application, using the relay UE being a terminal as an example, the radio frequency unit 901 is configured to receive a PC5 radio resource control RRC message sent by first UE, where the PC5 RRC message is used to trigger relay UE to enter a connected state.

Optionally, in this embodiment of this application, the radio frequency unit 901 is configured to send a first message to the first UE;

The first message carries at least one of a version information indication and a capability information indication.

The version information indication is used to indicate version information of the relay UE; and
the capability information indication is used to indicate whether the relay UE supports a first function, where the first function is a relay function or a multipath function of a first standard version.

Optionally, in this embodiment of this application, the radio frequency unit 901 is specifically configured to: send the first message to the first UE in a case that relay UE supporting the first function and relay UE only supporting a relay function of a second standard version but not supporting the first function are present in a network.

Optionally, in this embodiment of this application, an RRC container of the first message includes at least one of the version information indication and capability information indication.

Optionally, in this embodiment of this application, the first message includes at least one of the following:
a PC5 discovery message;
a PC5-S message; and
a PC5-RRC message.

In the path establishment apparatus provided in this embodiment of this application, the terminal receives the PC5 RRC message sent by the first UE, and is triggered through the PC5 RRC message to enter the connected state, so as to provide forwarding services for the first UE even when the RRC reconfiguration complete message sent by the first UE cannot be received.

It can be understood that for the implementation processes of the implementations mentioned in this embodiment, reference may be made to the related descriptions of the path establishment method in the method embodiments, with the same or corresponding technical effects achieved. To avoid repetition, details are not described herein again.

An embodiment of this application further provides a network-side device, which includes a processor and a communication interface, where the communication interface is coupled to the processor, and the processor is configured to run a program or instructions to implement the steps of the method embodiments shown in FIG. 1 to FIG. 4. The network-side device embodiment corresponds to the foregoing network-side device method embodiment, and the implementation processes and implementations of the foregoing method embodiments can be applied to the network-side device embodiment, with the same technical effects achieved.

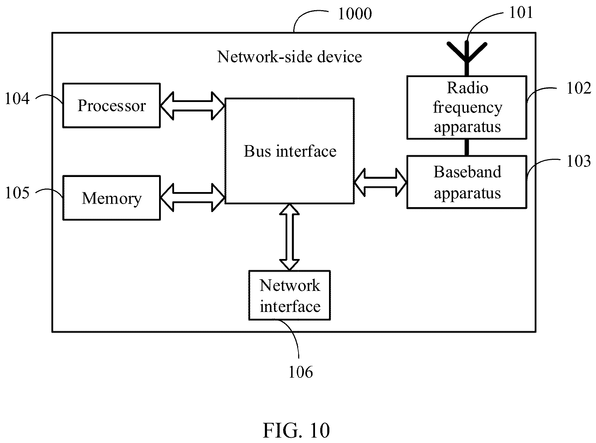

Specifically, an embodiment of this application further provides a network-side device. As shown in FIG. 10, the network-side device 1000 includes an antenna 101, a radio frequency apparatus 102, a baseband apparatus 103, a processor 104, and memory 105. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out by using the antenna 101.

The method executed by the network-side device in the foregoing embodiments may be implemented on the baseband apparatus 103. The baseband apparatus 103 includes a baseband processor.

The baseband apparatus 103 may include, for example, at least one baseband board, where a plurality of chips are disposed on the baseband board. As shown in FIG. 10, one of the chips is, for example, the baseband processor, and connected to the memory 105 through a bus interface, to invoke the program in the memory 105 to perform the operations of the network device shown in the foregoing method embodiment.

The network-side device may further include a network interface 106, where the interface is, for example, a common public radio interface (Common Public Radio Interface, CPRI).

Specifically, the network-side device 1000 according to this embodiment of the present invention further includes instructions or programs stored in the memory 105 and capable of running on the processor 104, and the processor 104 calls the instructions or programs in the memory 105 to execute the methods performed by the modules shown in FIG. 7, with the same technical effects achieved. To avoid repetition, details are not described herein again.

An embodiment of this application further provides a readable storage medium, where the readable storage medium stores a program or instructions, and when the program or the instructions are executed by a processor, the processes of the foregoing embodiments of the path establishment method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement the processes of the foregoing embodiments of the path establishment method, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and when being executed by at least one processor, the computer program/program product is configured to implement the processes of the foregoing embodiments of the path establishment method, with the same technical effects achieved. To avoid repetition, details are not repeated herein.

An embodiment of the application further provides a communication system, which includes first UE, relay UE and a network-side device, where the first UE can be configured to perform the steps of the path establishment method executed by the first UE, the relay UE can be configured to perform the steps of the path establishment method executed by the second UE, and the network-side device can be configured to perform the steps of the path establishment method executed by the network-side device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples can be combined in other examples.

According to the description of the foregoing implementations, persons skilled in the art can clearly understand that the method in the foregoing embodiments may be implemented by a computer software product in combination with a necessary general hardware platform. Specifically, the method in the foregoing embodiments may alternatively be implemented by hardware. The computer software product is stored in a storage medium (such as a ROM, a RAM, a magnetic disk, or an optical disc), and includes several instructions to enable a terminal or a network-side device to execute the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementation manners without departing from principles of this application and the protection scope of the claims, many and all such implementation manners fall within the protection scope of this application.

## Claims

1. A path establishment method, wherein the method comprises:
determining, by first UE, based on a transmission path configuration of a signaling radio bearer SRB1 carrying Uu signaling, whether to send a PC5 radio resource control RRC message to relay UE, wherein the PC5 RRC message is used to trigger the relay UE to enter a connected state; wherein
a transmission path corresponding to the transmission path configuration of the SRB1 carrying Uu signaling comprises:
an indirect path between the first UE and a network-side device, and a direct path between the first UE and the network-side device; wherein
the indirect path comprises a PC5 link between the first UE and the relay UE and a Uu link between the relay UE and the network-side device.

2. The method according to claim 1, wherein the transmission path configuration is used to configure a transmission path of the SRBl; and the determining, by first UE, based on a transmission path configuration of an SRB1 carrying Uu signaling, whether to send a PC5 RRC message to relay UE comprises:
sending, by the first UE, the RRC message to the relay UE in a case that the transmission path is the direct path; or
not sending, by the first UE, the PC5 RRC message to the relay UE in a case that it is determined that the transmission path is the indirect path.

3. The method according to claim 1, wherein the transmission path configuration is used to configure a transmission path of the SRB1; and the determining, by first UE, based on a transmission path configuration of an SRB1 carrying Uu signaling, whether to send a PC5 RRC message to relay UE comprises:
in a case that the transmission path comprises the direct path and the indirect path, not sending, by the first UE, the PC5 RRC message to the relay UE if the 1st uplink RRC message or an RRC reconfiguration complete message carried by the SRB1 is transmitted on the indirect path after the indirect path is established; or sending the PC5 RRC message to the relay UE if the 1st uplink RRC message or the RRC reconfiguration complete message carried by the SRB1 is transmitted on the direct path; or
in a case that the transmission path comprises the direct path or the indirect path, not sending, by the first UE, the PC5 RRC message to the relay UE if the 1st uplink RRC message or an RRC reconfiguration complete message carried by the SRB1 is transmitted on the indirect path after the indirect path is established; or sending the PC5 RRC message to the relay UE if the 1st uplink RRC message or the RRC reconfiguration complete message carried by the SRB1 is transmitted on the direct path.

4. The method according to claim 1, wherein a message carried by the SRB1 comprises an RRC reconfiguration complete message, the RRC reconfiguration complete message is a response message to an RRC reconfiguration message, and the RRC reconfiguration message comprises configuration information related to addition of an indirect path.

5. The method according to any one of claims 1 to 4, before the determining, by first UE, based on a transmission path configuration of an SRB1 carrying Uu signaling, whether to send a PC5 RRC message to relay UE, further comprising:
receiving, by the first UE, a reconfiguration message sent by the network-side device, wherein the reconfiguration message comprises configuration information related to addition of an indirect path; and
establishing, by the first UE, a PC5 connection between the first UE and the relay UE based on the reconfiguration message.

6. The method according to any one of claims 1 to 4, wherein in a case that the transmission path configuration of the SRB1 satisfies a first condition, the first UE determines, based on the transmission path configuration of the SRB1 carrying Uu signaling, not to send the PC5 RRC message to the relay UE; wherein the first condition comprises at least one of the following:
a single transmission path of the SRB1 is configured as the indirect path;
the SRB1 is configured to be transmitted on the direct path and the indirect path through a split bearer mode, and a primary path is the indirect path;
the SRB1 is configured to be transmitted on the direct path and the indirect path through a split bearer mode, and the SRB1 is in a duplication mode;
the SRB1 is configured to be transmitted on the direct path and the indirect path through a split bearer mode, the primary path is the direct path, and the SRB1 is for transmission on the indirect path independently or in duplication; and
the 1st uplink RRC message or the RRC reconfiguration complete message carried by the SRB1 is configured to be transmitted on the indirect path.

7. The method according to any one of claims 1 to 4, wherein in a case that the transmission path configuration of the SRB1 satisfies a second condition, the first UE determines, based on the transmission path configuration of the SRB1 carrying Uu signaling, to send the PC5 RRC message to the relay UE; wherein the second condition comprises at least one of the following:
a single transmission path of the SRB1 is configured as the direct path;
the SRB1 is configured to be transmitted on the direct path and the indirect path through a split bearer mode, and a primary path is the direct path; and
the 1st uplink RRC message or the RRC reconfiguration complete message carried by the SRB1 is configured to be transmitted on the direct path.

8. The method according to any one of claims 1 to 4, wherein
the PC5 RRC message satisfies any one of the following:
the PC5 RRC message is a legacy PC5 RRC message; and
the PC5 RRC message is a newly added PC5 RRC message.

9. The method according to claim 8, wherein the PC5 RRC message is a legacy PC5 RRC message, and the RRC message carries an indication field, wherein the indication field is used to indicate the relay UE to enter a connected state to provide a forwarding service.

10. The method according to claim 1, wherein the determining, by first UE, based on a transmission path configuration of an SRB1 carrying Uu signaling, whether to send a PC5 RRC message to relay UE comprises:
in a case that all relay UEs in a default network support a first function by default, determining, by the first UE, based on the transmission path configuration of the signaling radio bearer SRB1 carrying Uu signaling, whether to send the PC5 RRC message to the relay UE; wherein
the first function is a relay function or a multipath function of a first standard version.

11. The method according to claim 1, before the determining, by first UE, based on a transmission path configuration of an SRB1, whether to send a PC5 RRC message to relay UE, further comprising:
receiving, by the first UE, a first message from the relay UE; wherein
the first message carries at least one of a version information indication and a capability information indication;
the version information indication is used to indicate version information of the relay UE; and
the capability information indication is used to indicate whether the relay UE supports a first function, wherein the first function is a relay function or a multipath function of a first standard version.

12. The method according to claim 11, wherein the receiving, by the first UE, a first message from the relay UE comprises:
in a case that relay UE supporting the first function and relay UE only supporting a relay function of a second standard version but not supporting the first function are present in a network, receiving, by the first UE, the first message from the relay UE.

13. The method according to claim 11 or 12, wherein an RRC container of the first message comprises at least one of the version information indication and the capability information indication.

14. The method according to any one of claims 11 to 13, wherein the first message comprises at least one of the following:
a PC5 discovery message;
a PC5-S message; and
a PC5-RRC message.

15. The method according to claim 1, before the determining, by first UE, based on a transmission path configuration of an SRB1, whether to send a PC5 RRC message to relay UE, further comprising:
determining, by the first UE, a potential relay UE that satisfies a reporting condition, and reporting a measurement result of the potential relay UE based on a reporting rule.

16. The method according to claim 15, wherein in a case that the potential relay UE comprises at least one potential relay UE, the reporting a measurement result of the potential relay UE based on a reporting rule comprises:
using only relay UE supporting multipath in the at least one potential relay UE as candidate relay UE, and reporting a measurement result of the candidate relay UE; or
using a potential relay UE supporting multipath in the at least one potential relay UE as a high-priority candidate relay UE, and preferentially reporting a measurement result of the candidate relay UE; or
reporting a measurement result of the at least one potential relay UE and capability indication information of the at least one potential relay UE, wherein the capability indication information indicates whether the potential relay UE supports multipath transmission; or
in a case that the at least one potential relay UE comprises a plurality of potential relay UEs, performing reporting in different lists or fields separately for a potential relay UE supporting multipath transmission and a potential relay UE not supporting multipath transmission in the plurality of potential relay UEs.

17. The method according to any one of claims 14 to 16, wherein the reporting rule is explicitly indicated by the network-side device, or the reporting rule is a default or preconfigured rule.

18. A path establishment method, wherein the method comprises:
receiving, by relay UE, a PC5 radio resource control RRC message sent by first UE, wherein the PC5 RRC message is used to trigger the relay UE to enter a connected state.

19. The method according to claim 18, before the receiving, by relay UE, a PC5 radio resource control RRC message sent by first UE, further comprising:
sending, by the relay UE, a first message to the first UE; wherein
the first message carries at least one of a version information indication and a capability information indication;
the version information indication is used to indicate version information of the relay UE; and
the capability information indication is used to indicate whether the relay UE supports a first function, wherein the first function is a relay function or a multipath function of a first standard version.

20. The method according to claim 19, wherein the sending, by the relay UE, a first message to the first UE comprises:
in a case that relay UE supporting the first function and relay UE only supporting a relay function of a first standard version but not supporting the first function are present in a network, sending, by the relay UE, the first message to the first UE.

21. The method according to claim 19 or 20, wherein an RRC container of the first message comprises at least one of the version information indication and the capability information indication.

22. The method according to any one of claims 19 to 21, wherein the first message comprises at least one of the following:
a PC5 discovery message;
a PC5-S message; and
a PC5-RRC message.

23. A path establishment method, wherein the method comprises:
sending, by a network-side device, a first reconfiguration message to first UE; wherein
the first reconfiguration message comprises configuration information related to addition of an indirect path; and the first reconfiguration message is used to establish a PC5 connection between the first UE and the relay UE.

24. The method according to claim 23, before the sending, by a network-side device, a first reconfiguration message to first UE, further comprising:
sending, by the network-side device, a second configuration message to the first UE; wherein
the second configuration message is used to configure a transmission path of a signaling radio bearer SRB1 carrying Uu signaling.

25. The method according to claim 24, wherein a transmission path corresponding to a transmission path configuration comprises at least one of the following:
an indirect path between the first UE and the network-side device; and
a direct path between the first UE and the network-side device; wherein
the indirect path comprises a PC5 link between the first UE and the relay UE and a Uu link between the relay UE and the network-side device.

26. The method according to claim 24 or 25, wherein a transmission path configuration of the SRB1 satisfies a first condition, and the first condition comprises any one of the following:
a single transmission path of the SRB1 is configured as the indirect path;
the SRB1 is configured to be transmitted on the direct path and the indirect path through a split bearer mode, and a primary path is the indirect path;
the SRB1 is configured to be transmitted on the direct path and the indirect path through a split bearer mode, and the SRB1 is in a duplication mode;
the SRB1 is configured to be transmitted on the direct path and the indirect path through a split bearer mode, the primary path is the direct path, and the SRB1 is for transmission on the indirect path independently or in duplication; and
the 1st uplink RRC message or the RRC reconfiguration complete message carried by the SRB1 is configured to be transmitted on the indirect path.

27. The method according to claim 24 or 25, wherein a transmission path configuration of the SRB1 satisfies a second condition, and the second condition comprises any one of the following:
a single transmission path of the SRB1 is configured as the direct path;
the SRB1 is configured to be transmitted on the direct path and the indirect path through a split bearer mode, and a primary path is the direct path; and
the 1st uplink RRC message or the RRC reconfiguration complete message carried by the SRB1 is configured to be transmitted on the direct path.

28. The method according to claim 23, before the sending, by a network-side device, a first reconfiguration message to first UE, further comprising:
sending, by the network-side device, a third configuration message to the first UE; wherein
the third configuration message carries at least one of indication information and a reporting rule;
the indication information is used to indicate whether the network-side device supports reporting a measurement result of potential relay UE; and
the reporting rule is used for the first UE to report the measurement result of the potential relay UE.

29. The method according to claim 28, wherein the reporting rule comprises any one of the following:
in a case that there is at least one potential relay UE, using only relay UE supporting multipath in the at least one potential relay UE as candidate relay UE, and reporting a measurement result of the candidate relay UE; or
in a case that there is at least one potential relay UE, using a potential relay UE supporting multipath in the at least one potential relay UE as a high-priority candidate relay UE, and preferentially reporting a measurement result of the candidate relay UE; or
in a case that there is at least one potential relay UE, reporting a measurement result of the at least one potential relay UE and capability indication information of the at least one potential relay UE, wherein the capability indication information indicates whether the potential relay UE supports multipath transmission; or
in a case that there are a plurality of potential relay UEs, performing reporting in different lists or fields separately for a potential relay UE supporting multipath transmission and a potential relay UE not supporting multipath transmission in the plurality of potential relay UEs.

30. A path establishment apparatus, wherein the apparatus comprises a determining module;
the determining module is configured to determine, based on a transmission path configuration of a signaling radio bearer SRB1 carrying Uu signaling, whether to send a PC5 radio resource control RRC message to relay UE, wherein the PC5 RRC message is used to trigger the relay UE to enter a connected state; wherein
a transmission path corresponding to the transmission path configuration of the SRB1 carrying Uu signaling comprises at least one of the following:
an indirect path between the first UE and a network-side device, and a direct path between the first UE and the network-side device; wherein
the indirect path comprises a PC5 link between the first UE and the relay UE and a Uu link between the relay UE and the network-side device.

31. A path establishment apparatus, wherein the apparatus comprises a receiving module;
the receiving module is configured to receive a PC5 radio resource control RRC message sent by first UE, wherein the PC5 RRC message is used to trigger relay UE to enter a connected state.

32. A path establishment apparatus, wherein the apparatus comprises a sending module;
the sending module is configured to send a first reconfiguration message to first UE; wherein
the first reconfiguration message comprises configuration information related to addition of an indirect path; and the first reconfiguration message is used to establish a PC5 connection between the first UE and the relay UE.

33. UE, comprising a processor and a memory, wherein a program or instructions capable of running on the processor are stored in the memory, and when the program or instructions are executed by the processor, the steps of the path establishment method according to any one of claims 1 to 17 are implemented; or the steps of the path establishment method according to any one of claims 18 to 22 are implemented.

34. A network-side device, comprising a processor and a memory, wherein the memory stores a program or instructions capable of running on the processor, and when the program or instructions are executed by the processor, the steps of the path establishment method according to any one of claims 23 to 29 are implemented.

35. A readable storage medium, wherein the readable storage medium stores a program or instructions, and when the program or instructions are executed by a processor, the steps of the path establishment method according to any one of claims 1 to 17 are implemented; or the steps of the path establishment method according to any one of claims 18 to 22 are implemented; or the steps of the path establishment method according to any one of claims 23 to 29 are implemented.

36. A computer program product, wherein the computer program product is stored in a storage medium, and the computer program product is executed by at least one processor to implement the steps of the path establishment method according to any one of claims 1 to 17, or the steps of the path establishment method according to any one of claims 18 to 22, or the steps of the path establishment method according to any one of claims 23 to 29.

37. A chip, wherein the chip comprises a processor and a communication interface, the communication interface is coupled to the processor, and the processor is configured to run a program or instructions to implement the steps of the path establishment method according to any one of claims 1 to 17, or the steps of the path establishment method according to any one of claims 18 to 22, or the steps of the path establishment method according to any one of claims 23 to 29.
